# EUROPEAN PATENT APPLICATION

(11) **EP 4 303 090 A1**
(43) Date of publication of application: **10.01.2024**
(21) Application number: 21929023.6
(22) Date of filing: 03.03.2021
(51) Int. Cl.: B61B 13/00, B61D 47/00

(54) **MOVING BODY**

(71) Applicant: Fuji Corporation, Chiryu-shi, Aichi 472-8686 (JP)
(72) Inventor: SAWANAMI, Hisato, Chiryu-shi, Aichi 472-8686 (JP); KAWAGUCHI, Koji, Chiryu-shi, Aichi 472-8686 (JP); ODA, Takuya, Chiryu-shi, Aichi 472-8686 (JP)
(74) Representative: Grünecker Patent- und Rechtsanwälte PartG mbB
(86) International application number: PCT/JP2021/008171
(87) International publication number: WO 2022/185447

(57) **Abstract**

According to the present disclosure, there is provided a moving body including a holding device configured to hold a cargo, a driving device configured to move the moving body, a detection device configured to detect a parameter relating to a stable degree of the cargo in the holding device when the moving body is moving, and a control device configured to determine whether a state of the cargo is stable using the parameter relating to the stable degree, and to perform stabilization control in which the driving device is controlled such that the state of the cargo is stable when it is determined that the state of the cargo is not stable.

## Description

### Technical Field

The present description discloses a moving body.

### Background Art

In the related art, a moving body for conveying a cargo is known. For example, Patent Literature 1 discloses a conveying vehicle that determines whether a state of a cargo is stable, based on a measured value of an acceleration sensor when the cargo is conveyed, and instructs an operator to reload the cargo when determining that the state of the cargo is not stable.

### Patent Literature

Patent Literature 1: JP-A-2020-158092

### Summary of the Invention

### Technical Problem

However, in the conveying vehicle disclosed in Patent Literature 1, it is not possible to change a moving speed of the conveying vehicle when the cargo is conveyed even in a case where a state of the cargo is not stable. Therefore, there is a possibility that controlling the moving body may become unstable or the cargo may be dropped.

The present disclosure is made to solve the above-described problems, and a main object of the present disclosure is to move a moving body in a state where a cargo is stable.

### Solution to Problem

According to a first aspect of the present disclosure, there is provided a moving body including a holding device configured to hold a cargo. The moving body includes a driving device configured to move the moving body, a detection device configured to detect a parameter relating to a stable degree of the cargo in the holding device, when the moving body is moving, and a control device configured to determine whether a state of the cargo is stable using the parameter relating to the stable degree, and to perform stabilization control in which the driving device is controlled such that the state of the cargo is stable when it is determined that the state of the cargo is not stable.

The moving body according to the first aspect of the present disclosure determines whether the state of the cargo is stable using the parameter relating to the stable degree, and performs the stabilization control in which the driving device is controlled such that the state of the cargo is stable when it is determined that the state of the cargo is not stable. Therefore, the moving body can be moved in a state where the cargo is stable by reflecting the stable degree of the cargo in a movement of the moving body.

According to a second aspect of the present disclosure, there is provided a moving body including a holding device configured to hold a cargo, a driving device configured to move the moving body, an area estimation device configured to estimate an area in which the moving body moves, a storage device, and a control device configured to receive stabilization control associated with a cargo unstable area in which a state of the cargo is not stable from a management device configured to manage the moving body or another moving body different from the moving body, to cause the storage device to store the stabilization control, to read the stabilization control associated with the cargo unstable area from the storage device before the moving body passes through the cargo unstable area stored in the storage device, and to perform the read stabilization control when the moving body passes through the cargo unstable area.

The moving body according to the second aspect of the present disclosure receives the stabilization control associated with the cargo unstable area in which the state of the cargo is not stable from the management device configured to manage the moving body or another moving body different from the moving body, causes the storage device to store the stabilization control, reads the stabilization control associated with the cargo unstable area from the storage device before the moving body passes through the cargo unstable area stored in the storage device, and performs the read stabilization control when the moving body passes through the cargo unstable area. Accordingly, the moving body can be moved in a state where the cargo is stable even when the moving body cannot determine whether the state of the cargo is stable.

### Brief Description of Drawings

Fig. 1 is a schematic view illustrating an example of moving device system 1.
Fig. 2 is a view illustrating an example of automatic moving device 40.
Fig. 3 is a plan view of automatic moving device 40.
Fig. 4 is a flowchart illustrating an example of an automatic moving process routine.
Fig. 5 is a view illustrating a state of cargo P on loading platform 13.
Fig. 6 is a view illustrating a state of cargo P on loading platform 13.
Fig. 7 is a flowchart illustrating an example of a stabilization control subroutine.
Fig. 8 is a view illustrating an example of stabilization data D.
Fig. 9 is a view illustrating another example of stabilization control.
Fig. 10 is a view illustrating another example of the stabilization control.
Fig. 11 is a view illustrating an example of drone 80.

### Description of Embodiments

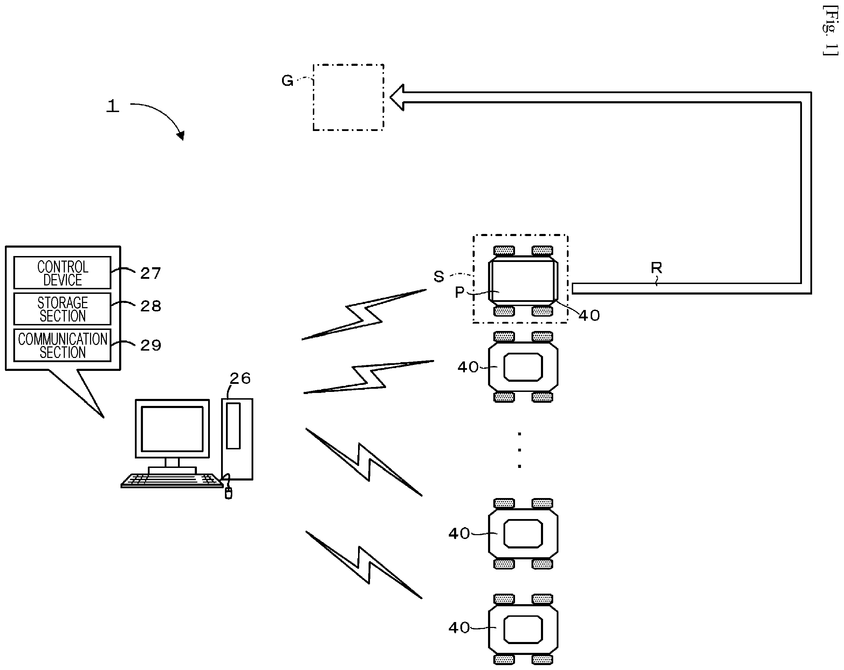

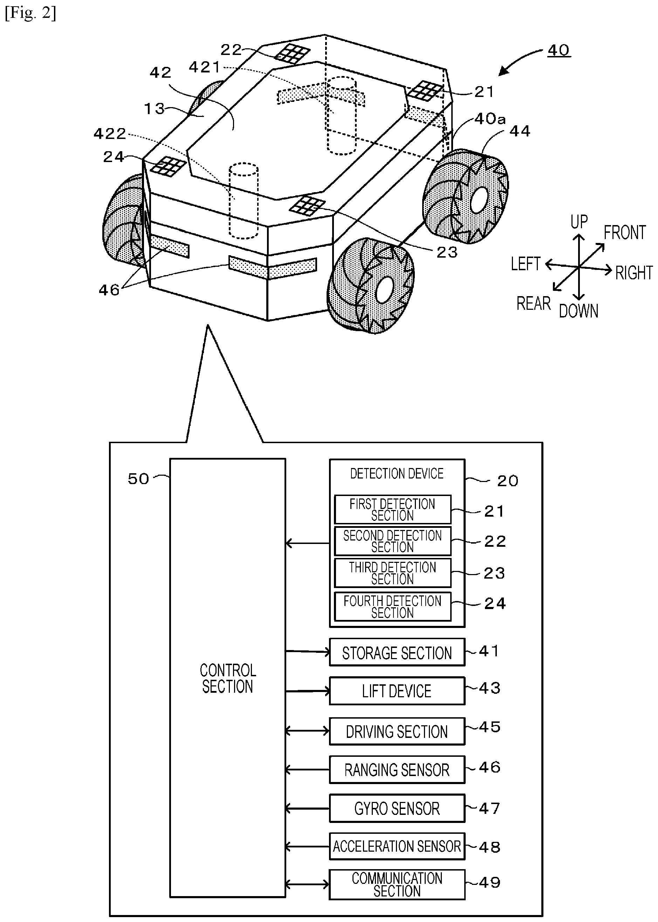

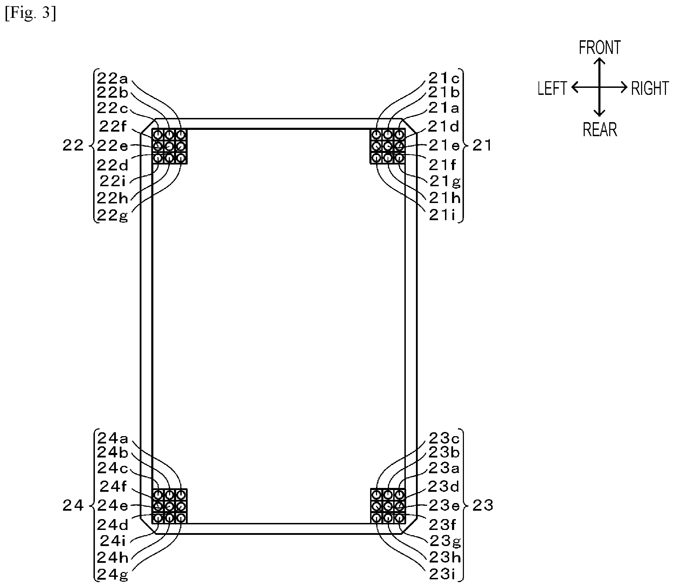

Embodiments according to the present disclosure will be described with reference to the drawings. Fig. 1 is a schematic view illustrating an example of moving device system 1. Fig. 2 is a view illustrating an example of automatic moving device 40. Fig. 3 is a plan view of automatic moving device 40. In the present embodiment, a left-right direction, a front-rear direction, and an up-down direction (up-down direction in Fig. 3 is a direction perpendicular to the drawing) will be described as illustrated in each of the drawings.

As illustrated in Fig. 1, moving device system 1 includes management device 26 and multiple automatic moving devices 40. Management device 26 includes control device 27, storage section 28, and communication section 29. Control device 27 has a CPU, and controls the whole device. Storage section 28 stores various application programs, various data files, and moving path R of automatic moving device 40. Communication section 29 communicates with an external device such as automatic moving device 40.

Automatic moving device 40 is a moving body in which four mecanum wheels 44 are attached to the front, rear, left, and right sides of vehicle body 40a, and moves in moving path R in accordance with a movement command received from management device 26. Automatic moving device 40 is configured as an autonomous mobile robot (AMR) that moves by detecting surroundings.

As illustrated in Figs. 2 and 3, automatic moving device 40 has loading platform 13, detection device 20, storage section 41, lift surface 42, lift device 43, mecanum wheel 44, driving section 45, ranging sensor 46, gyro sensor 47, acceleration sensor 48, communication section 49, and control section 50.

Loading platform 13 is an upper surface of vehicle body 40a. In moving device system 1, cargo P is loaded on loading platform 13 by a robot or an operator (not illustrated). Automatic moving device 40 moves in moving path R in a state where cargo P is loaded on loading platform 13.

Detection device 20 is a device for detecting cargo P on loading platform 13. Detection device 20 has first to fourth detection sections 21 to 24 provided in four corners of loading platform 13. First detection section 21 is provided in a right front corner of loading platform 13, second detection section 22 is provided in a left front corner of loading platform 13, third detection section 23 is provided in a right rear corner of loading platform 13, and fourth detection section 24 is provided in a left rear corner of loading platform 13. First detection section 21 includes multiple pressure sensors 21a to 21i (here, three) in the front-rear direction, and multiple pressure sensors 21a to 21i (here, three) in the left-right direction. Alphabet letters a, b, and c are assigned to ends of the pressure sensors in this order from a right upper side to a left direction, alphabet letters d, e, and f are assigned to ends of the pressure sensors in this order from a right middle side to the left direction, and alphabet letters g, h, and i are assigned to ends of the pressure sensors in this order from a right lower side to the left direction. Second detection section 22 similarly includes pressure sensors 22a to 22i, third detection section 23 similarly includes pressure sensors 23a to 23i, and fourth detection section 24 similarly includes pressure sensors 24a to 24i. In this case, when pressure sensors 21a to 21i, 22a to 22i, 23a to 23i, and 24a to 24i are not particularly distinguished from each other, all of these will be referred to as pressure sensors. The pressure sensor forming each detection section outputs a signal indicating that cargo P is present on the pressure sensor (hereinafter, referred to as an ON signal) to control section 50 when cargo P is present on the sensor, and outputs a signal indicating that cargo P is absent on the sensor (hereinafter, referred to as an OFF signal) to control section 50 when cargo P is absent on the sensor.

Storage section 41 stores various application programs and various data files.

Lift surface 42 is a surface provided in a center of loading platform 13, which can be lifted and lowered. Lift device 43 lifts and lowers or inclines lift surface 42 via two rods 421 and 422 attached to front and rear sides of a back surface of lift surface 42.

Mecanum wheel 44 has a structure in which multiple rollers supported to be freely rotatable at an inclination angle of 45° with respect to an axle are provided on a grounding surface side. Automatic moving device 40 includes four mecanum wheels 44, and each mecanum wheel 44 is independently rotated forward or rotated rearward. In this manner, automatic moving device 40 is movable in all directions or be capable of performing spin turning, pivotal turning, and gentle turning.

Driving section 45 is a motor connected to each of mecanum wheels 44 and driving automatic moving device 40 to travel by rotationally driving connected mecanum wheels 44.

Ranging sensor 46 detects an object, a failure, and a distance existing around automatic moving device 40. For example, ranging sensor 46 detects the presence or the distance of the object by irradiating the surroundings with light such as a laser or a sound wave and detecting a reflected wave. Ranging sensor 46 is capable of detecting the presence of the object with respect to a region of an entire outer periphery of automatic moving device 40.

Gyro sensor 47 detects a vehicle body direction and an arrangement angle of automatic moving device 40, and inputs a detection result to control section 50. Acceleration sensor 48 detects an acceleration when automatic moving device 40 moves, and inputs a detection result to control section 50.

Communication section 49 wirelessly exchanges information with management device 26 or another automatic moving device 40 forming moving device system 1. Control section 50 moves automatic moving device 40 along moving path R to target position G, based on a command obtained from management device 26 via communication section 49.

Control section 50 is a controller for controlling the whole device of automatic moving device 40. Control section 50 outputs control signals to storage section 41, lift device 43, driving section 45, and communication section 49, and inputs signals from first to fourth detection sections 21 to 24 on loading platform 13, ranging sensor 46, gyro sensor 47, acceleration sensor 48, and communication section 49. Control section 50 determines a stable degree of cargo P on loading platform 13, based on the ON signal or the OFF signal of each of pressure sensors 21a to 24i, or estimates a position of automatic moving device 40 with respect to moving path R by recognizing a moving direction or a moving distance of automatic moving device 40, based on a driving state of driving section 45. In addition, control section 50 prepares an environment map around automatic moving device 40, based on an input signal from ranging sensor 46, outputs a control signal for controlling lift device 43, based on an input signal from gyro sensor 47, or outputs a control signal for driving and controlling driving section 45, based on an input signal from acceleration sensor 48.

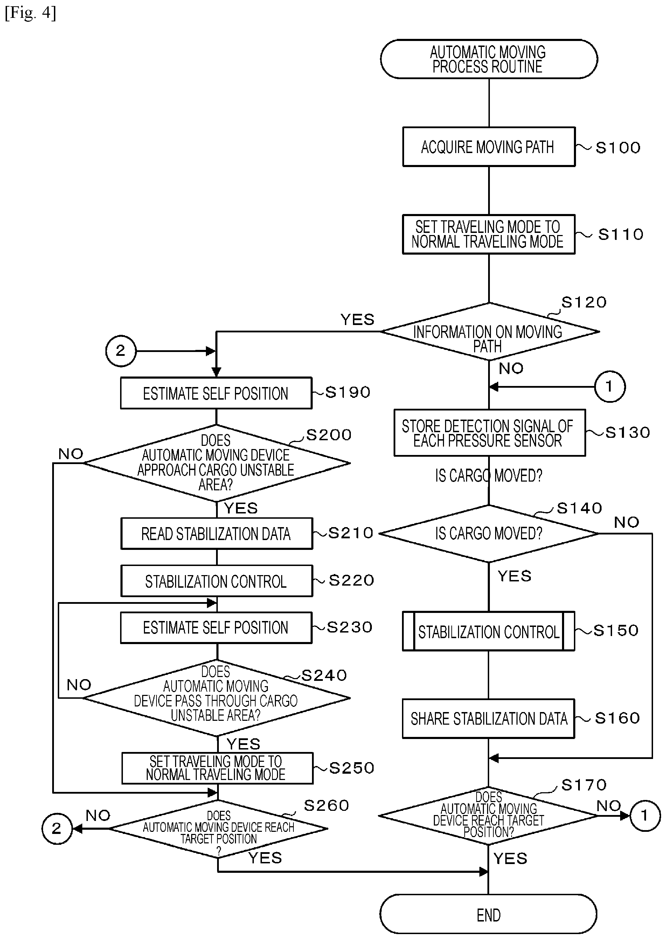

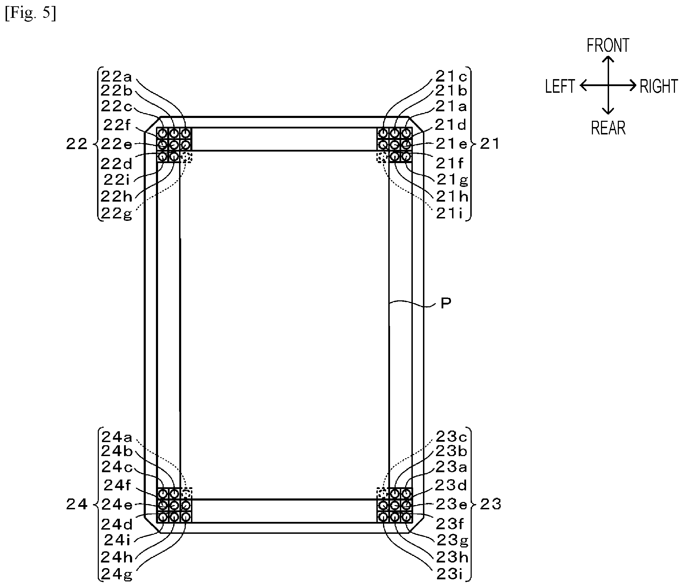

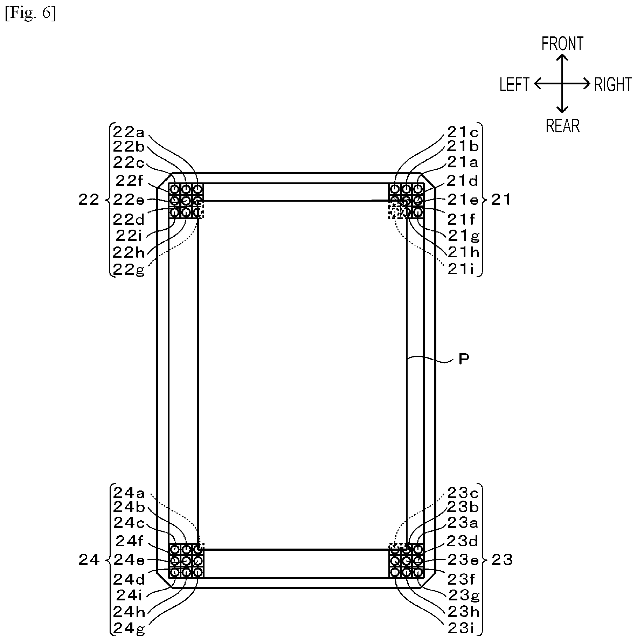

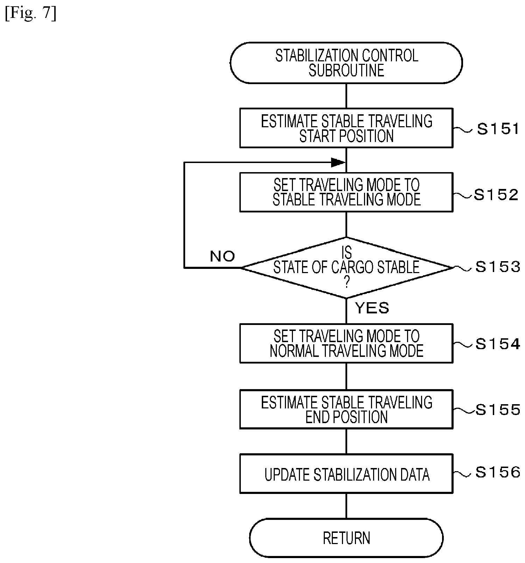

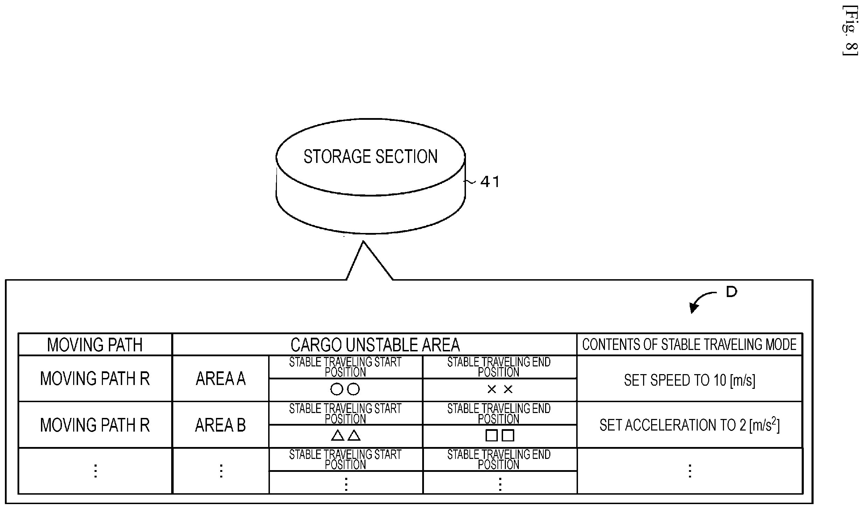

Next, in moving device system 1 configured in this way, a process in which automatic moving device 40 automatically moves in moving path R will be described with reference to Figs. 4 to 8. Fig. 4 is a flowchart illustrating an example of an automatic moving process routine. Figs. 5 and 6 are views illustrating a state of cargo P on loading platform 13. Fig. 7 is a flowchart illustrating an example of a stabilization control subroutine. Fig. 8 is a view illustrating an example of stabilization data D. The automatic moving process routine and the stabilization control subroutine are stored in storage section 41. The automatic moving process routine is performed after an automatic movement command is received from management device 26.

When the routine starts, control section 50 acquires moving path R (S100). Specifically, control section 50 acquires moving path R of automatic moving device 40 as illustrated in Fig. 1 together with the automatic movement command from management device 26, and stores information in storage section 41. Moving path R is a path connecting initial position S and target position G. Next, control section 50 sets a traveling mode of automatic moving device 40 to a normal traveling mode (S 110). Here, the normal traveling mode means a traveling mode in which control section 50 drives and controls driving section 45 such that automatic moving device 40 moves in moving path R with a relatively high acceleration or speed.

Next, control section 50 determines whether there is information on moving path R in stabilization data D (S120). Specifically, as illustrated in Fig. 8, when contents of the cargo unstable area and the stable traveling mode which are associated with moving path R are stored in stabilization data D, control section 50 performs an affirmative determination in S120, and when not stored, control section 50 performs a negative determination.

When it is determined in S120 that there is no information associated with moving path R in stabilization data D, control section 50 stores a detection signal of each pressure sensor (S130). Specifically, control section 50 causes storage section 41 to store information in which the signal input to control section 50 by pressure sensors 21a to 24i is any detection signal between the ON signal and the OFF signal. For example, when a state of cargo P on loading platform 13 is in a state as illustrated in Fig. 5, control section 50 causes storage section 41 to store information indicating that the ON signal is input only from pressure sensors 21i, 22g, 23c, and 24a, and the OFF signal is input from the other pressure sensors.

Next, control section 50 determines whether cargo P moves on loading platform 13 (S140). Specifically, control section 50 compares a signal content of each pressure sensor stored in storage section 41 in previous S130 with a signal content of each pressure sensor stored in storage section 41 in current S130, and determines whether there is a difference between the two signal contents. For example, it is assumed that a previous state of cargo P is a state illustrated in Fig. 5 and a current state of cargo P is a state illustrated in Fig. 6. In this case, whereas the signal of pressure sensors 21i, 22g, 23c, and 24a is the ON signal and the rest is the OFF signal in the previous time, the signal of pressure sensors 21e, 21f, 21h, 21i, 22d, 22g, 23b, 23c, and 24a is the ON signal and the rest is the OFF signal in the current time. Therefore, there is a difference between the previous signal content of each pressure sensor and the current signal content of each pressure sensor. Accordingly, control section 50 determines that cargo P is moved on loading platform 13. When control section 50 performs S140 for the first time after this routine starts, the signal content of each pressure sensor stored in storage section 41 does not exist in previous S130. Therefore, for the sake of convenience, control section 50 determines that cargo P is not moved.

When determining in S140 that cargo P is not moved on loading platform 13, control section 50 proceeds to 170. On the other hand, when determining in S140 that cargo P is moved on loading platform 13, control section 50 performs the stabilization control subroutine (S150). When the stabilization control subroutine starts, control section 50 causes storage section 41 to store a stable traveling start position as illustrated in Fig. 7 (S151). Specifically, control section 50 estimates an odometry position of automatic moving device 40 with respect to moving path R using odometry when the stabilization control subroutine starts, and causes storage section 41 to store the position as a stable traveling start position. The term "odometry" means calculating a moving amount of automatic moving device 40 from initial position S and a moving direction of automatic moving device 40, based on a cumulative drive amount of the drive amount per unit time of driving section 45 connected to each mecanum wheel 44.

Next, control section 50 sets a traveling mode of automatic moving device 40 to a stable traveling mode (S152). Here, the stable traveling mode means a traveling mode in which control section 50 drives and controls driving section 45 such that cargo P is less likely to move on loading platform 13, such that a magnitude of the acceleration is reduced, or such that a moving speed of automatic moving device 40 is lowered . Specifically, when automatic moving device 40 accelerates or decelerates (when there is an input signal indicating that the acceleration or the deceleration is detected from acceleration sensor 48), control section 50 drives and controls driving section 45 such that an absolute value of the acceleration or the deceleration decreases by a predetermined value. In addition, when automatic moving device 40 moves at a constant speed (when there is no input signal indicating that the acceleration or the deceleration is detected from acceleration sensor 48), control section 50 drives and controls driving section 45 such that the speed of automatic moving device 40 decreases by a predetermined value.

Next, control section 50 determines whether a state of cargo P is stable (S153). This determination is performed in the same manner as in S140. When determining in S153 that the state of cargo P is not stable, control section 50 returns to S152 again, and when determining that the state is stable, control section 50 changes the traveling mode of automatic moving device 40 from the stable traveling mode to a normal mode (S154). In this way, control section 50 decreases the acceleration or the deceleration of automatic moving device 40 or decreases the speed until the state of cargo P is stable.

Subsequently, control section 50 causes storage section 41 to store a stable traveling end position (S155). Specifically, control section 50 estimates the odometry position of automatic moving device 40 at a time point in which the stable traveling mode ends using odometry, and causes storage section 41 to store the position as the stable traveling end position.

Control section 50 then updates stabilization data D (S156). Specifically, control section 50 sets an area between the stable traveling start position estimated in S151 and the stable traveling end position estimated in S156, as a cargo unstable area, and causes storage section 41 to store the current cargo unstable area and the contents of the stable traveling mode in association with moving path R. In this manner, when automatic moving device 40 moves again in the cargo unstable area, automatic moving device 40 can pass through the cargo unstable area in a state where cargo P is stable by reading and performing the previously performed stabilization control. Thereafter, control section 50 ends the stabilization control subroutine, and proceeds to S160 of the automatic moving process routine.

Next, control section 50 shares stabilization data D with another automatic moving devices 40 forming moving device system 1 (S160). Specifically, control section 50 transmits stabilization data D to another automatic moving device 40 or management device 26 via communication section 49. When control section 50 transmits stabilization data D to management device 26, management device 26 transmits stabilization data D to another automatic moving devices 40 via communication section 29. In this manner, stabilization data D is shared. Therefore, when another automatic moving device 40 approaches the cargo unstable area, automatic moving device 40 can be moved in a state where cargo P is stable by performing the same process as that of the previously performed stabilization control.

Next, it is determined whether automatic moving device 40 reaches target position G (S170). Specifically, control section 50 determines whether the odometry position of automatic moving device 40 is target position G. When automatic moving device 40 does not reach target position G, the process returns to S130 again.

Subsequently, a process when it is determined in S120 that information associated with moving path R is stored in stabilization data D will be described. When it is determined in S120 that the information associated with moving path R is stored in stabilization data D, control section 50 estimates a self position (S190). Specifically, control section 50 estimates the odometry position of automatic moving device 40 with respect to moving path R using odometry.

Next, control section 50 determines whether automatic moving device 40 approaches the cargo unstable area (S200). Specifically, control section 50 determines whether the odometry position of automatic moving device 40 estimated in S190 is within a predetermined distance from the stable traveling start position of the cargo unstable area of moving path R stored in storage section 41. When the odometry position of automatic moving device 40 estimated in S190 is not within the predetermined distance from the stable traveling start position of the cargo unstable area, control section 50 determines that automatic moving device 40 does not approach the cargo unstable area, and proceeds to S260. On the other hand, when the odometry position of automatic moving device 40 estimated in S190 is within the predetermined distance from the stable traveling start position of the cargo unstable area, control section 50 determines that automatic moving device 40 approaches the cargo unstable area, and reads stabilization data D stored in storage section 41 (S210). Specifically, control section 50 reads contents of the stable traveling mode associated with the cargo unstable area in which automatic moving device 40 approaches (for example, the moving speed of automatic moving device 40 is 10 [m/s] or lower when automatic moving device 40 approaches cargo unstable area A of stabilization data D illustrated in Fig. 8, and the acceleration is 2 [m/s²] when automatic moving device 40 approaches cargo unstable area B) from stabilization data D stored in storage section 41.

Next, control section 50 performs the stabilization control (S220). Specifically, when automatic moving device 40 enters the cargo unstable area, control section 50 drives and controls driving section 45 such that the traveling mode of automatic moving device 40 becomes the stable traveling mode in the contents read in S210. Next, control section 50 estimates a self position of automatic moving device 40 with respect to moving path R (S230). Specifically, control section 50 estimates a position of automatic moving device 40 with respect to moving path R using odometry.

Next, control section 50 determines whether automatic moving device 40 passes through the cargo unstable area (S240). Specifically, control section 50 determines whether the odometry position of automatic moving device 40 estimated in S230 is included in the cargo unstable area of moving path R. When the odometry position of automatic moving device 40 estimated in S230 is included in the cargo unstable area (between the stable traveling start position and the stable traveling end position), control section 50 determines that automatic moving device 40 does not pass through the cargo unstable area, and returns again to S230.

On the other hand, when the odometry position of automatic moving device 40 estimated in S230 is not included in the cargo unstable area, control section 50 determines that automatic moving device 40 passes through the cargo unstable area, and sets the traveling mode of automatic moving device 40 to the normal mode (S250).

Control section 50 then determines whether automatic moving device 40 reaches target position G (S260). This determination is the same as 170 described above. When it is determined that automatic moving device 40 does not reach target position G, the process returns again to S 190. On the other hand, when it is determined in S260 or S 170 described above that automatic moving device 40 reaches target position G, control section 50 ends this routine.

Here, a correspondence relation between elements of the present embodiment and elements of the present disclosure will be clarified. Automatic moving device 40 of the present embodiment corresponds to a moving body of the present disclosure, loading platform 13 corresponds to a holding device, driving section 45 and mecanum wheel 44 correspond to a driving device, detection device 20 corresponds to a detection device, and control section 50 corresponds to a control device. In addition, storage section 41 corresponds to a storage device of the present disclosure, and control section 50 corresponds to an area estimation device. In addition, management device 26 corresponds to a management device of the present disclosure.

In automatic moving device 40 described above, it is determined whether a state of cargo P is stable using detection signals of pressure sensors 21a to 21i, 22a to 22i, 23a to 23i, and 24a to 24i, and when it is determined that the state of cargo P is not stable, the stabilization control for driving and controlling driving section 45 is performed such that the state of cargo P is stable. Therefore, automatic moving device 40 can be moved in a state where cargo P is stable by reflecting a stable degree of cargo P in the movement of automatic moving device 40.

In addition, when determining that the state of cargo P is not stable, control section 50 performs the stabilization control, causes storage section 41 to store the performed stabilization control in association with the cargo unstable area in which the state of cargo P is not stable, reads the stabilization control associated with the cargo unstable area from storage section 41 before automatic moving device 40 passes again through the cargo unstable area stored in storage section 41, and performs the read stabilization control when automatic moving device 40 passes through the cargo unstable area. That is, the same stabilization control as the stabilization control previously performed when automatic moving device 40 approaches the cargo unstable area again is read in advance and performed. Therefore, automatic moving device 40 can be moved in a state where cargo P is stable when automatic moving device 40 moves in the cargo unstable area.

Furthermore, control section 50 transmits the stabilization control stored in storage section 41 in association with the cargo unstable area to management device 26 for managing automatic moving device 40 or another automatic moving device 40 forming moving device system 1. Therefore, information relating to the cargo unstable area and the stabilization control can be shared with another automatic moving devices 40. Accordingly, when another automatic moving device 40 approaches the cargo unstable area, another automatic moving device 40 can be moved in a state where cargo P is stable by performing the same control as the previously performed stabilization control.

The present disclosure is not limited in any way to the above-described embodiment, and as a matter of course, the present disclosure can be carried out in various aspects without departing from the technical scope of the present disclosure.

For example, in the above-described embodiment, the cargo unstable area and the stabilization control are stored in storage section 41 in association with each other in S156 of the stabilization control subroutine, but the present invention is not limited to this. For example, in S156 of the stabilization control subroutine, only the cargo unstable area may be stored in storage section 41. In this case, when automatic moving device 40 approaches the cargo unstable area again, automatic moving device 40 can move while avoiding the cargo unstable area. Therefore, cargo P can be moved in a stable state. In addition, in this case, the cargo unstable area may be transmitted to management device 26 or another automatic moving device 40 forming moving device system 1. In this case, automatic moving device 40 may share information relating to the cargo unstable area with another automatic moving devices 40. Therefore, when another automatic moving device 40 approaches the cargo unstable area, another automatic moving device 40 can move while avoiding the cargo unstable area, and another automatic moving device 40 can move in a state where cargo P is stable.

In the above-described embodiment, stabilization data D may be stored in storage section 41 by being received from another automatic moving device 40 forming moving device system 1. In this case, even when automatic moving device 40 cannot determine whether the state of cargo P on loading platform 13 is stable, automatic moving device 40 can be moved in a state where cargo P is stable.

In the above-described embodiment, a light sensor including a light projecting element and a light receiving element may be adopted instead of the pressure sensor.

In the above-described embodiment, each of first to fourth detection sections 21 to 24 includes nine pressure sensors, but the present invention is not limited to this. For example, each of first to fourth detection sections 21 to 24 may include 10 or more sensors or eight or less sensors.

In the above-described embodiment, control section 50 also serves as the area estimation device of the present disclosure, but is not limited to this. For example, automatic moving device 40 may be provided with another area estimation device different from control section 50.

In the above-described embodiment, the self position of automatic moving device 40 is estimated using odometry, but the present invention is not limited to this. For example, the self position of automatic moving device 40 with respect to moving path R may be estimated using GPS, the self position of automatic moving device 40 with respect to moving path R may be estimated using Simultaneous Localization and Mapping (SLAM), or the self position of automatic moving device 40 may be estimated using an Augmented Reality (AR) marker.

In the above-described embodiment, in S 140 of the automatic moving process routine, it is determined whether the state of cargo P on loading platform 13 is stable, based on the signals output by pressure sensors 21a to 24i provided on loading platform 13, but the present invention is not limited to this. For example, it may be determined whether cargo P on loading platform 13 is stable by determining whether wheels idle or slip, based on a difference between the self position of automatic moving device 40 with respect to moving path R estimated using the SLAM (hereinafter, referred to as a SLAM position) and the odometry position. Here, for example, the SLAM position is estimated as follows. That is, first, an environment map associated with moving path R is prepared in advance. Control section 50 then estimates a position of automatic moving device 40 with respect to moving path R by comparing the environment map prepared by automatic moving device 40 while moving in moving path R with the environment map prepared in advance. In this case, when the odometry position is closer to target position G than the SLAM position, it may be determined that the wheels idle, or when the SLAM position is closer to target position G than the odometry position, it may be determined that the wheels slip.

In the above-described embodiment, moving path R is stored in management device 26, but the present invention is not limited to this. For example, moving path R may be derived by management device 26 or automatic moving device 40, based on initial position S and target position G. When management device 26 derives moving path R, management device 26 derives moving path R connecting initial position S and target position G before transmitting an automatic movement command to automatic moving device 40. When automatic moving device 40 derives moving path R, automatic moving device 40 receives the automatic movement command, initial position S, and target position G, prepares the environment map or estimates the self position using the SLAM, for example, and derives moving path R connecting initial position S and target position G, based on the environment map or the self position.

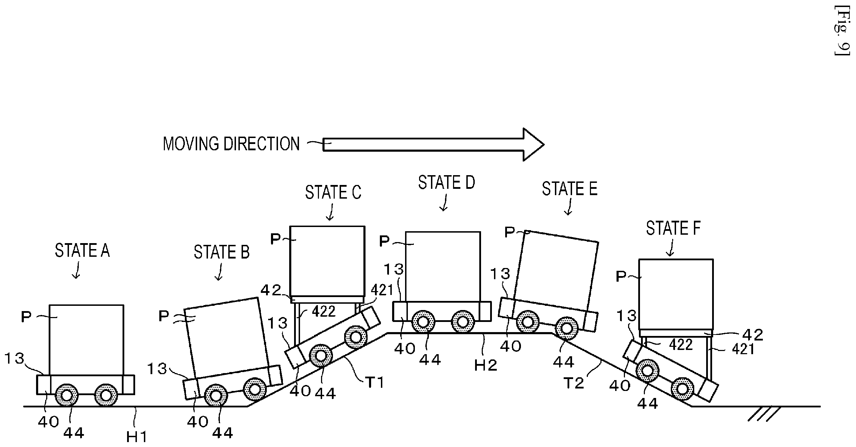

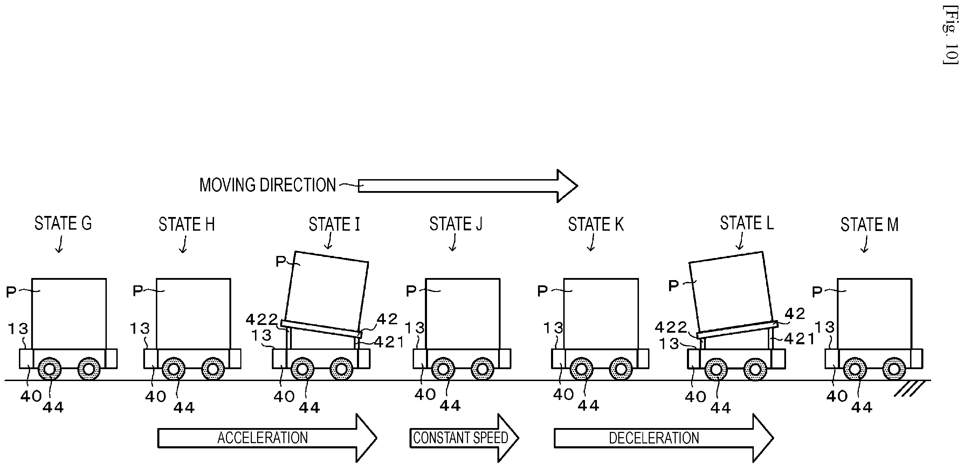

In the above-described embodiment, control section 50 drives and controls driving section 45 when the state of cargo P on loading platform 13 is not stable, but the present invention is not limited to this. For example, when automatic moving device 40 moves in a moving direction illustrated in Fig. 9, lift device 43 may be controlled in accordance with inclination of a ground surface on which automatic moving device 40 moves. For example, when automatic moving device 40 moves on horizontal surface H1 as in state A, control section 50 controls lift device 43 such that heights of front and rear rods 421 and 422 on a back surface side of lift surface 42 are equal, and causes lift surface 42 to be horizontal. Next, when automatic moving device 40 moves to upward inclined surface T1 as in state B and a detection signal indicating that automatic moving device 40 moves in the upward inclination is input from gyro sensor 47, control section 50 causes front rod 421 and rear rod 422 to expand and contract in a direction for canceling the inclination as in state C, and maintains lift surface 42 to be horizontal. Next, as in state D, when automatic moving device 40 moves to horizontal surface H2 and a detection signal of the inclination of automatic moving device 40 is not input from gyro sensor 47, control section 50 controls lift device 43 such that the heights of front and rear rods 421 and 422 are equal, and causes lift surface 42 to be horizontal. Then, as in state E, automatic moving device 40 moves to downward inclined surface T2, and when a detection signal indicating that automatic moving device 40 moves on downward inclined surface T2 is input from gyro sensor 47, control section 50 causes front rod 421 and rear rod 422 to expand and contract in the direction for canceling the inclination, and maintains lift surface 42 to be horizontal. Alternatively, as illustrated in Fig. 10, lift device 43 may be controlled in accordance with the acceleration and the deceleration of automatic moving device 40. In this case, first, when the movement starts as in state H from a state where automatic moving device 40 is stopped as in state G, and acceleration sensor 48 detects the acceleration of automatic moving device 40, control section 50 causes front rod 421 and rear rod 422 to expand and contract in a direction for canceling an inertial force such that cargo P does not slide to an opposite side in the moving direction of automatic moving device 40 by the inertial force as in state I, and inclines lift surface 42. Next, as illustrated in state J, when automatic moving device 40 moves at a constant speed, and the detection signal of the acceleration is not input from acceleration sensor 48, control section 50 controls lift device 43 such that the heights of front and rear rods 421 and 422 are equal, and causes lift surface 42 to be horizontal. Then, as illustrated in state K, when automatic moving device 40 starts to decelerate, and a detection signal of the deceleration is input from acceleration sensor 48, control section 50 causes front rod 421 and rear rod 422 to expand and contract in the direction for canceling the inertial force as illustrated in Fig. L such that cargo P does not slide in the moving direction of the automatic moving device by the inertial force, and inclines lift surface 42. Then, as in state M, when automatic moving device 40 moves at a constant speed, and a detection signal of the acceleration is not input from acceleration sensor 48, control section 50 controls lift device 43 such that the heights of front and rear rods 421 and 422 are equal, and causes lift surface 42 to be horizontal.

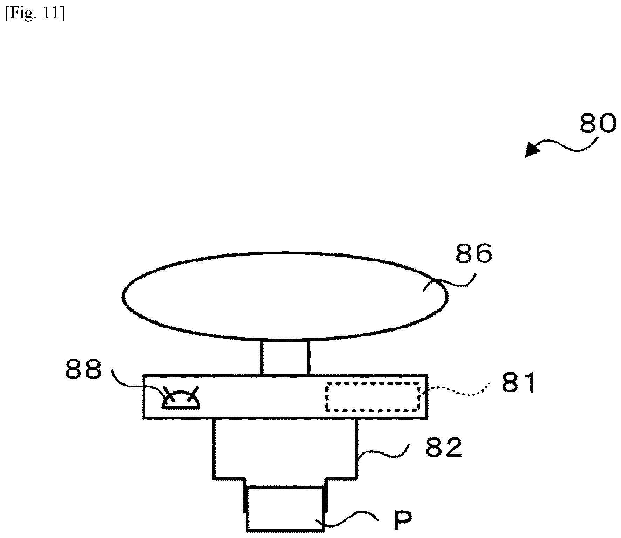

In the above-described embodiment, automatic moving device 40 is configured as the AMR, but is not limited to this. For example, automatic moving device 40 may be an Automatic Guided Vehicle (AGV) or drone 80 capable of free flight as illustrated in Fig. 11. Drone 80 includes control section 81, cargo gripping section 82, driving section 86, and communication section 88. Control section 81 controls whole drone 80. Control section 81 operates cargo gripping section 82, communicates with management device 26 via communication section 88, or drives driving section 86. Cargo gripping section 82 includes a pair of gripping arms and an operation mechanism for operating each of the gripping arms in a direction closer to or separated from each other, and can grip and release cargo P by operating the gripping arms. Driving section 86 includes a propeller for flight (not illustrated) and a motor for driving the propeller. Communication section 88 wirelessly exchanges information with an external device such as management device 26. In addition, drone 80 additionally includes a sensor (not illustrated) or a GPS receiver for receiving a signal from a GPS satellite, and detects an inclination when drone 80 flies, based on a detection signal of the sensor, estimates a current position of the host device with respect to moving path R detected by the GPS receiver, or performs automatic steering control, based on moving path R. In this case, based on a sudden inclination or a change in a position of drone 80 when drone 80 flies, it may be determined whether the state of cargo P is stable, and when it is determined that the state of cargo P is not stable, the stabilization control may be performed in which driving section 86 is controlled such that the state of cargo P is stable.

### Industrial Applicability

A moving body of the present disclosure can be used in a technical field of a commodity distribution system for delivering commodities.

### Reference Signs List

1 moving body system, 13 loading platform, 20 detection device, 21 first detection section, 21a to 21i pressure sensor, 22 second detection section, 22a to 22i pressure sensor, 23 third detection section, 23a to 23i pressure sensor, 24 fourth detection section, 24a to 24i pressure sensor, 26 management device, 27 control device, 28 storage section, 29 communication section, 40 automatic moving device, 40a vehicle body, 41 storage section, 42 lift surface, 43 lift device, 44 mecanum wheel, 45 driving section, 46 ranging sensor, 47 gyro sensor, 48 acceleration sensor, 49 communication section, 50 control section, 80 drone, 81 control section, 82 cargo gripping section, 86 driving section, 88 communication section, 421, 422 rod, D stabilization data, G target position, H1, H2 horizontal surface, M environment map, P cargo, R moving path, S initial position, T1 upward inclined surface, T2 downward inclined surface

## Claims

1. A moving body comprising:
a holding device configured to hold a cargo;
a driving device configured to move the moving body;
a detection device configured to detect a parameter relating to a stable degree of the cargo in the holding device, when the moving body is moving; and
a control device configured to determine whether a state of the cargo is stable using the parameter relating to the stable degree, and to perform stabilization control in which the driving device is controlled such that the state of the cargo is stable when it is determined that the state of the cargo is not stable.

2. The moving body according to claim 1, further comprising:
a storage device; and
an area estimation device configured to estimate an area in which the moving body moves,
wherein when determining that the state of the cargo is not stable, the control device performs the stabilization control and causes the storage device to store an area where the state of the cargo is not stable, as a cargo unstable area.

3. The moving body according to claim 2,
wherein the control device transmits the cargo unstable area stored in the storage device to a management device configured to manage the moving body or another moving body different from the moving body.

4. The moving body according to claim 2,
wherein when determining that the state of the cargo is not stable, the control device performs the stabilization control, causes the storage device to store the performed stabilization control in association with the cargo unstable area which is an area in which the state of the cargo is not stable, reads the stabilization control associated with the cargo unstable area from the storage device before the moving body passes again through the cargo unstable area stored in the storage device, and performs the read stabilization control when the moving body passes through the cargo unstable area.

5. The moving body according to claim 4,
wherein the control device transmits the stabilization control stored in the storage device in association with the cargo unstable area to a management device configured to manage the moving body or another moving body different from the moving body.

6. The moving body according to any one of claims 1 to 5,
wherein the holding device has a loading platform configured to place the cargo, and
the detection device includes a sensor configured to detect a position of the cargo on the loading platform as the parameter,
the control device determines whether the state of the cargo is stable by detecting a change in the position of the cargo with respect to the loading platform when the moving body is moving, and when determining that the state of the cargo is not stable, controls the driving section such that the position of the cargo is not changed in the stabilization control.

7. A moving body comprising:
a holding device configured to hold a cargo;
a driving device configured to move the moving body;
an area estimation device configured to estimate an area in which the moving body moves;
a storage device; and
a control device configured to receive stabilization control associated with a cargo unstable area in which a state of the cargo is not stable, from a management device configured to manage the moving body or another moving body different from the moving body, to cause the storage device to store the stabilization control, to read the stabilization control associated with the cargo unstable area from the storage device before the moving body passes through the cargo unstable area stored in the storage device, and to perform the read stabilization control when the moving body passes through the cargo unstable area.
